# EUROPÄISCHE PATENTSCHRIFT

(11) **EP 3 191 364 B1**
(45) Veröffentlichungstag und Bekanntmachung des Hinweises auf die Patenterteilung: **19.02.2020**
(21) Anmeldenummer: 15759481.3
(22) Anmeldetag: 09.09.2015
(51) Int. Cl.: B64C 3/38, B64C 3/44, B64C 13/40, B64C 1/26, B64C 3/16, B64C 3/56

(54) **FLUGZEUG MIT HYDRAULISCHEN STÜTZSTREBEN ZWISCHEN RUMPF UND FLÜGELN**
AIRCRAFT HAVING HYDRAULIC SUPPORT STRUTS BETWEEN FUSELAGE AND WINGS
AVION ÉQUIPÉ DE MONTANTS DE SUPPORT HYDRAULIQUE ENTRE LE FUSELAGE ET LES AILES

(30) Priorität: 12.09.2014 DE 102014113218
(43) Veröffentlichungstag der Anmeldung: 19.07.2017
(73) Patentinhaber: Airbus Operations GmbH, 21129 Hamburg (DE)
(72) Erfinder: KLETTKE, Marcus, 21129 Hamburg (DE)
(74) Vertreter: Bird & Bird LLP
(86) Internationale Anmeldenummer: PCT/EP2015/070624
(87) Internationale Veröffentlichungsnummer: WO 2016/038097

(56) Entgegenhaltungen:
- DE-C- 525 387
- FR-A- 421 352
- US-A- 1 783 529
- US-A- 2 186 558
- US-A- 2 603 435
- US-A- 5 078 338
- US-A1- 2010 072 760

## Beschreibung

Die Erfindung bezieht sich auf ein Flugzeug mit einem Rumpf und mit diesen verbundenen Flügeln, wobei sich zwischen Rumpf und Flügeln jeweils eine Stützstrebe erstreckt, die sowohl mit dem Rumpf als auch mit dem Flügel verbunden ist.

Derartige Flugzeuge sind allgemein bekannt, und insbesondere bei Konzepten für Flugzeuge, die ganz oder teilweise elektrisch angetrieben werden sollen (z.B. Boeing SUGAR Volt), sind derartige Stützstreben zwischen Rumpf und Flügeln vorgesehen, da die Flügel eine erhebliche Spannweite aufweisen und eine Abstützung benötigen.

US 2603435 A offenbart ein Flugzeug mit einem Rumpf und Tragflächen. Die Tragflächen sind über stoßabsorbierende Mechanismen mit dem Rumpf verbunden. Die stoßabsorbierenden Mechanismen umfassen jeweils einen Arbeitszylinder und einen Stange. Die Arbeitszylinder können mittels einer Hydraulikpumpe mit Hydraulikflüssigkeit beaufschlagt werden, um die Tragflächen auf und ab zu bewegen.

US 1783529 A offenbart ein Flugzeug, bei dem die Neigung der Flügel mittels zweier hydraulischer Zylinder verstellt werden kann. US 2186558 A offenbart ein Flugzeug mit zwei Tragflächen, die schwenkbar am Flugzeugrumpf gelagert sind. Um die Schwingungen der Tragflächen zu dämpfen, ist ein Arbeitszylinder zwischen Rumpf und einem Tragflächenanhang vorgesehen. Dieser soll die Schwingungen aufnehmen. DE 525387 A offenbart ebenfalls ein System, mit dem die Bewegungen von Tragflächen passiv gedämpft werden können. Auch FR 421352 A offenbart ein passives System, mit dem die Schwingungen der Tragflächen eines Flugzeugs gedämpft werden können.

US2010/0072760 offenbart ein regeneratives Stossdämpfersystem mit Hydraulikzylinder für Fahrzeuge.

Es ist Aufgabe der Erfindung, ein Flugzeug derart auszubilden, dass die vorgesehenen Stützstreben zusätzlich zur Abstützung des jeweiligen Flügels gegenüber dem Rumpf weitere Funktionen haben.

Erfindungsgemäß wird ein Flugzeug mit den Merkmalen des unabhängigen Anspruchs 1 bereitgestellt. Bevorzugte Ausführungsformen sind Gegenstand der abhängigen Ansprüche.

Zur Lösung dieser Aufgabe wird ein Flugzeug der eingangs erwähnten Art derart erfindungsgemäß ausgestaltet, dass die Stützstrebe einen hydraulischen Arbeitszylinder aufweist, der zur Verschwenkung des Flügels gesteuert mit Hydraulikflüssigkeit beaufschlagbar ist. Der Arbeitszylinder ist mit einem Hydraulikmotor und einem elektrischen Motor/Generator gekoppelt, so dass eine durch Flügelvibrationen oder -schwingungen verursachte Kolbenbewegung den Hydraulikmotor und damit den Motor/Generator antreibt.

Durch das Beaufschlagen des Arbeitszylinders mit Hydraulikflüssigkeit wird dessen Länge verändert und dadurch auch die Stellung des Flügels bezüglich dem Flugzeugrumpf. Eine gleichzeitige oder synchrone Verstellung der Arbeitszylinder um gleiche Beträge bewirkt eine gleichzeitige, gleiche Verstellung der Flügelpositionen, wodurch das Tragwerk an verschiedenste Betankungs- und Beladungsfälle angepasst werden kann.

Diese Anpassung kann dabei sowohl vor dem Start des Flugzeugs als auch während des Flugs erfolgen.

Es ist auch möglich, die Arbeitszylinder unterschiedlich oder asynchron mit Hydraulikflüssigkeit zu beaufschlagen, wodurch die Flügel unterschiedlich verstellt werden und eine Rollbewegung des Flugzeugs entsteht, die sonst üblicherweise von Querrudern erzeugt wird.

In einer bevorzugten Ausgestaltung der Erfindung ist der Zylinderkörper des Arbeitszylinders mit dem Rumpf verbunden, und der Kolben des Arbeitszylinders kann mit einem Abschnitt einer Stützstrebe, der sich zum Flügel erstreckt, oder, bei entsprechender Länge des Kolbens, mit dem Flügel verbunden sein. Es ist auch möglich, den Zylinder des Arbeitszylinders fest am Rumpf zu befestigten und das freie Ende der Kolbenstange über einen Schwenkhebel mit dem rumpfnahen Ende der Stützstrebe zu verbinden.

Im normalen Flugbetrieb ergeben sich Vibrationen oder Schwingungen, die auf die Arbeitszylinder der Stützstreben wirken und Verlagerungen des Kolbens bewirken. Diese Verlagerungsbewegungen erfolgen mehr oder weniger schnell in Abhängigkeit vom Widerstand, der der Verlagerung von Hydraulikflüssigkeit im Arbeitszylinder entgegenwirkt. In einer bevorzugten Ausgestaltung der Erfindung können die im Strömungsverlauf der Hydraulikflüssigkeit liegenden Ventile derart ansteuerbar sein, dass der Strömungswiderstand für die Hydraulikflüssigkeit einstellbar ist. Auf diese Weise lassen sich die Flügel weicher oder härter einstellen.

In einer weiteren Ausgestaltung der Erfindung ist der jeweilige Arbeitszylinder mit einem Hydraulikmotor und einem elektrischen Motor/Generator gekoppelt, so dass die im Flugbetrieb durch Flügelvibrationen oder -schwingungen verursachte Kolbenbewegung den Hydraulikmotor und damit den Motor/Generator antreiben.

Ein derartiger Aufbau ist als sogenannte GenShock-Technologie für die Aufhängung von Kraftfahrzeugen bekannt. Durch den erfindungsgemäßen Einsatz bei einem Flugzeug wird aus den durch die Flügelvibrationen oder -schwingungen bewirkten Kolbenbewegungen Elektrizität erzeugt, wenn der Motor/Generator als Generator arbeitet. Diese Elektrizität kann gespeichert und für den Betrieb des Flugzeugs verwendet werden.

Da bei Flugzeugen ganz intensiv Gewichtseinsparungen angestrebt werden, werden erfindungsgemäß vorzugsweise Leichtbau-Arbeitszylinder eingesetzt, etwa solche mit Zylindern aus faserverstärktem Kunststoff, wie sie beispielsweise von der Parker Hannifin Corp., Cleveland, OH, U.S.A., hergestellt werden.

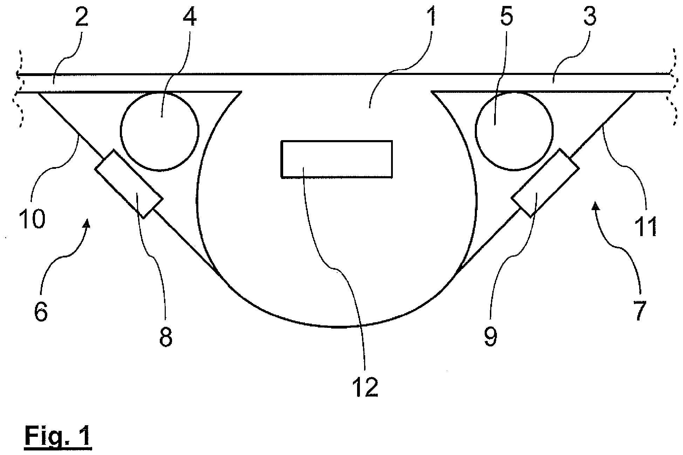

Die Erfindung wird im Folgenden anhand der stark vereinfachten und ein Ausführungsbeispiel zeigenden Prinzipdarstellung der Figur 1 näher erläutert.

Das dargestellte Flugzeug hat einen Rumpf 1 und Flügel 2, 3, an denen in üblicher Weise Triebwerke 4, 5 befestigt sind. Zwischen dem Rumpf 1 und dem Flügel 2 erstreckt sich eine Stützstrebe 6 und zwischen dem Rumpf 1 und dem Flügel 3 eine Stützstrebe 7, die beide gleich aufgebaut sind. Jede der Stützstreben 6, 7 enthält einen hydraulischen Arbeitszylinder, dessen Zylinderkörper 8, 9 am Rumpf 1 befestigt ist, während seine Kolbenstange 10, 11 mit den Flügeln 2, 3 verbunden ist. Dabei kann sich die Kolbenstange 10, 11 als Ganzes bis zum Flügel 2, 3 erstrecken oder aber mit einem Strebenabschnitt verbunden sein, der am Flügel 2, 3 befestigt ist.

Die hydraulischen Arbeitszylinder 8, 10 und 9, 11 sind in nicht dargestellter Weise jeweils mit einer Quelle für Hydraulikflüssigkeit verbunden. Diese kann Teil einer Einheit 12 sein, die an geeigneter Stelle im Rumpf 1 des Flugzeugs untergebracht ist. Diese Einheit 12 enthält zusätzlich zu den Hydraulikflüssigkeitsquellen für die Arbeitszylinder 8, 10 und 9, 11 einen Hydraulikmotor und einen elektrischen Motor/Generator für jeden der Arbeitszylinder sowie entsprechende Steuereinrichtungen. Diese ermöglichen eine Aktivierung der elektrischen Motoren/Generatoren, um die Hydraulikmotoren anzutreiben, die dann den Arbeitszylinder 8, 10 und 9, 11 Hydraulikflüssigkeit zuführen oder dieses aus ihnen absaugen.

Die Quellen für Hydraulikflüssigkeit, die Hydraulikmotoren und die elektrischen Motoren/Generatoren können selbstverständlich, statt zu einer Einheit zusammengefasst zu sein, auch einzeln im Rumpf untergebracht werden.

Erfolgt eine gleichzeitige Aktivierung der Motoren/Generatoren mit gleicher Drehzahl, so werden die Kolben der Arbeitszylinder 8, 10 und 9, 11 entsprechend verschoben und dadurch beide Flügel 2, 3 entweder angehoben oder abgesenkt. Hierdurch wird eine Anpassung an Tank- und Beladungszustände erreicht, durch die der Wirkungsgrad des Flugzeugs verbessert werden kann.

Werden die Motoren/Generatoren so angesteuert, dass einem der Arbeitszylinder mehr und dem anderen Arbeitszylinder weniger oder gar keine Hydraulikflüssigkeit zugeführt wird, so wird ein Flügel mehr und der andere Flügel weniger oder gar nicht verschwenkt. Dies führt zu einer Rollbewegung des Flugzeugs, wie sie üblicherweise vom Querruder erzeugt wird.

In diesem Zusammenhang sei erwähnt, dass mittels der hydraulischen Arbeitszylinder 8, 9 auch eine Verstellung der "Härte" der Flügel 2, 3 vorgenommen werden kann. Hierzu lässt sich der Widerstand für die Hydraulikflüssigkeit gegen Verdrängung im Zylinder 8, 9, etwa durch einstellbare Ventile, verändern. Die durch Flügelvibrationen und -schwingungen auf den Kolben des Arbeitszylinders 8, 10 und 9, 11 wirkenden Kräfte, die eine Verdrängung von Hydraulikflüssigkeit verursachen, können dann die Hydraulikflüssigkeit und damit den jeweiligen Kolben in Abhängigkeit vom eingestellten Strömungswiderstand für das Hydraulikfluid mehr oder weniger leicht verlagern, so dass der Flügel weicher oder fester eingestellt ist. Eine weichere Flügeleinstellung erhöht beispielsweise bei Turbulenzen den Kabinenkomfort.

Schließlich ist es auch möglich, die Kolbenbewegungen infolge von Flügelvibrationen und -schwingungen dazu zu nutzen, dem zugehörigen Hydraulikmotor Hydraulikflüssigkeit zuzuführen und den dadurch erfolgten Antrieb des Hydraulikmotors zum Antreiben des Motors/Generators zu benutzen, so dass dieser als Generator arbeitet und Elektrizität erzeugt, die für den Betrieb des Flugzeugs verwendet werden kann.

## Patentansprüche

1. Flugzeug mit einem Rumpf (1) und mit diesem verbundenen Flügeln (2, 3), wobei sich zwischen Rumpf (1) und Flügel (2; 3) jeweils eine Stützstrebe (6; 7) erstreckt, die so-wohl mit dem Rumpf (1) als auch mit dem Flügel (2; 3) verbunden ist, wobei die Stützstrebe (6; 7) einen hydraulischen Arbeitszylinder (8, 10; 9, 11) aufweist, der zur Verschwenkung des Flügels (2; 3) gesteuert mit Hydraulikflüssigkeit beaufschlagbar ist, **dadurch gekennzeichnet, dass** der Arbeitszylinder (8, 10; 9; 11) mit einem Hydraulikmotor und einem elektrischen Motor/Generator gekoppelt ist, so dass eine durch Flügelvibrationen oder -schwingungen verursachte Kolbenbewegung den Hydraulikmotor und damit den Motor/Generator antreibt.

2. Flugzeug nach Anspruch 1, **dadurch gekennzeichnet, dass** der Zylinder (8; 9) des Arbeitszylinders (8, 10; 9, 11) mit dem Rumpf (1) verbunden ist.

3. Flugzeug nach Anspruch 1 oder 2, **dadurch gekennzeichnet, dass** der Kolben (10; 11) des Arbeitszylinders (8, 10; 9, 11) mit einem Abschnitt der Stützstrebe (6; 7) verbunden ist, der sich zum Flügel (2; 3) erstreckt.

4. Flugzeug nach Anspruch 1, **dadurch gekennzeichnet, dass** der Zylinder des Arbeitszylinders fest am Rumpf befestigt und das freie Ende der Kolbenstange über einen Schwenkhebel mit dem rumpfnahen Ende der Stützstrebe verbunden ist.

5. Flugzeug nach einem der Ansprüche 1 bis 4, **dadurch gekennzeichnet, dass** die im Strömungsverlauf der Hydraulikflüssigkeit liegenden Ventile derart ansteuerbar sind, dass der Strömungswiderstand für die Hydraulikflüssigkeit einstellbar ist.

6. Flugzeug nach einem der Ansprüche 1 bis 5, **dadurch gekennzeichnet, dass** die Arbeitszylinder (8, 10; 9, 11) derart in Leichtbauweise hergestellt sind, dass der Zylinder (8; 9) des Arbeitszylinders (8, 10; 9, 11) aus faserverstärktem Kunststoff besteht.

## Claims

1. Aircraft with a fuselage (1) and wings (2, 3) connected thereto, wherein between the fuselage (1) and each wing (2; 3) a support strut (6; 7) extends which is connected both to the fuselage (1) and to the wing (2; 3), wherein the support strut (6; 7) has a hydraulic working cylinder (8, 10; 9, 11) to which hydraulic fluid can be applied in a controlled manner for pivoting the wing (2; 3), **characterized in that** the working cylinder (8, 10; 9; 11) is coupled to a hydraulic motor and an electric motor-generator such that a piston movement caused by wing vibrations or oscillations drives the hydraulic motor and thus the motor-generator.

2. Aircraft according to Claim 1, **characterized in that** the cylinder (8; 9) of the working cylinder (8, 10; 9, 11) is connected to the fuselage (1).

3. Aircraft according to Claim 1 or 2, **characterized in that** the piston (10; 11) of the working cylinder (8, 10; 9, 11) is connected to a portion of the support strut (6; 7) that extends to the wing (2; 3).

4. Aircraft according to Claim 1, **characterized in that** the cylinder of the working cylinder is fixedly fastened to the fuselage and the free end of the piston rod is connected by way of a pivot lever to that end of the support strut that is close to the fuselage.

5. Aircraft according to one of Claims 1 to 4, **characterized in that** the valves that lie in the flow path of the hydraulic fluid can be actuated such that the flow resistance for the hydraulic fluid can be set.

6. Aircraft according to one of Claims 1 to 5, **characterized in that** the working cylinders (8, 10; 9, 11) are produced with a lightweight construction such that the cylinder (8; 9) of the working cylinder (8, 10; 9, 11) consists of fibre-reinforced plastic.

## Revendications

1. Aéronef comprenant un fuselage (1) et des ailes (2, 3) raccordées à celui-ci, un montant de support (6 ; 7) s'étendant à chaque fois entre le fuselage (1) et les ailes (2 ; 3), lequel est raccordé à la fois au fuselage (1) et à l'aile (2 ; 3), le montant de support (6 ; 7) présentant un cylindre de travail hydraulique (8, 10 ; 9, 11) qui peut être sollicité avec du liquide hydraulique de manière commandée pour faire pivoter l'aile (2 ; 3), **caractérisé en ce que** le cylindre de travail (8, 10 ; 9 ; 11) est accouplé à un moteur hydraulique et à un moteur/générateur électrique de telle sorte qu'un mouvement de piston provoqué par des vibrations ou des oscillations de l'aile entraîne le moteur hydraulique et par conséquent le moteur/générateur.

2. Aéronef selon la revendication 1, **caractérisé en ce que** le cylindre (8 ; 9) du cylindre de travail (8, 10 ; 9, 11) est raccordé au fuselage (1).

3. Aéronef selon la revendication 1 ou 2, **caractérisé en ce que** le piston (10 ; 11) du cylindre de travail (8, 10 ; 9, 11) est raccordé à une portion du montant de support (6 ; 7) qui s'étend vers l'aile (2 ; 3) .

4. Aéronef selon la revendication 1, **caractérisé en ce que** le cylindre du cylindre de travail est assujetti au fuselage et l'extrémité libre de la tige de piston est raccordée par le biais d'un levier pivotant à l'extrémité du montant de support proche du fuselage.

5. Aéronef selon l'une quelconque des revendications 1 à 4, **caractérisé en ce que** les soupapes situées dans le trajet de l'écoulement du liquide hydraulique peuvent être pilotées de telle sorte que la résistance à l'écoulement pour le liquide hydraulique puisse être ajustée.

6. Aéronef selon l'une quelconque des revendications 1 à 5, **caractérisé en ce que** les cylindres de travail (8, 10 ; 9, 11) sont fabriqués avec une construction légère telle que le cylindre (8 ; 9) du cylindre de travail (8, 10 ; 9, 11) se compose de plastique renforcé par des fibres.
